# EUROPEAN PATENT APPLICATION

(11) **EP 4 746 258 A1**
(43) Date of publication of application: **20.05.2026**
(21) Application number: 24890400.5
(22) Date of filing: 14.10.2024
(51) Int. Cl.: H02K 3/50

(54) **INSULATING FRAME, STATOR ASSEMBLY, AND MOTOR**

(30) Priority: 17.11.2023 CN 202311536952; 17.11.2023 CN 202323118726 U; 17.11.2023 CN 202323118390 U; 17.11.2023 CN 202323118412 U
(71) Applicant: Huai'An Welling Motor Manufacturing Co., Ltd., Huai'an, Jiangsu 223005 (CN); Foshan Welling Washer Motor Manufacturing Co., Ltd., Foshan, Guangdong 528311 (CN)
(72) Inventor: YANG, Xiu, Jiangsu 223005 (CN); ZHU, Xiaogang, Jiangsu 223005 (CN); DING, Haolun, Jiangsu 223005 (CN); LUO, Hui, Jiangsu 223005 (CN); LV, Shuzhen, Jiangsu 223005 (CN)
(74) Representative: Ran, Handong
(86) International application number: PCT/CN2024/124798
(87) International publication number: WO 2025/103042

(57) **Abstract**

The present application discloses an insulating frame, a stator assembly, and a motor. The insulating frame is provided with a plurality of first wire clamping slots and a plurality of second wire clamping slots; mounting positions are arranged between the plurality of first wire clamping slots and the plurality of second wire clamping slots; and the mounting positions are used for mounting bonding wire terminals. According to the technical solution of the present application, the first wire clamping slots and the second wire clamping slots are provided on the insulating frame, and the bonding wire terminals are arranged between the first wire clamping slots and the second wire clamping slots, so that wire harnesses are respectively clamped in the first wire clamping slots and the second wire clamping slots.

## Description

### CROSS-REFERENCE TO RELATED APPLICATIONS

This application claims priority to Chinese Patent Application No. 202311536952.0, filed on November 17, 2023, Chinese Patent Application No. 202323118726.9, filed on November 17, 2023, Chinese Patent Application No. 202323118390.6, filed on November 17, 2023, and Chinese Patent Application No. 202323118412.9, filed on November 17, 2023. The disclosures of the above-mentioned applications are incorporated herein by reference in their entireties.

### TECHNICAL FIELD

The present application relates to the technical field of motors, and more particularly to an insulating frame, a stator assembly, and a motor.

### BACKGROUND

The wire harnesses leading from the windings of the stator in existing motors are typically connected to terminals for electrical connection to other control modules. Currently, commonly used connection methods include piercing terminals and wrapping terminal structures. Piercing terminals pose a risk of the BMC (Body MC) breaking the enameled wire at the piercing point, leading to substandard contact resistance and poor end-market performance. Wrapping terminals have low automation levels, reducing production efficiency by approximately half.

Therefore, the use of laser automated welding not only achieves a high degree of automation and high production efficiency, but also avoids the quality risks associated with puncture-type terminals, while simultaneously enabling automated operation when combined with laser welding.

Laser welding requires the wire harness to be as close to the terminals as possible. However, the wire harness leading from the winding often tilts upwards, resulting in poor laser welding results or low welding success rate.

### SUMMARY

The main objective of the present application is to propose an insulating frame, aiming to improve the welding effect of laser welding between the wire harness leading out of the stator winding of a motor and the terminal.

To achieve the above objective, the present application proposes an insulating frame, the insulating frame is provided with a plurality of first wire clamp grooves and a plurality of second wire clamp grooves, installation positions are provided between the plurality of first wire clamp grooves and the plurality of second wire clamp grooves, and the installation position is configured to install a welding wire terminal.

In an embodiment, the insulating frame includes a frame body and a weld platform connected to the frame body, the plurality of first wire clamp grooves are provided at the weld platform, and the plurality of second wire clamp grooves are provided at the frame body.

In an embodiment, the plurality of first wire clamp grooves and the plurality of second wire clamp grooves are provided in one-to-one correspondence.

In an embodiment, the weld platform is provided with a plurality of wire clamp platforms provided at intervals, the plurality of first wire clamp grooves are respectively provided at the plurality of wire clamp platforms, the first wire clamp groove is provided with a first opening, the first opening is configured to place a wire harness into the first wire clamp groove, and the first wire clamp groove is configured to penetrate through two opposite wall surfaces of the wire clamp platform respectively to allow the wire harness to pass through.

In an embodiment, the first wire clamp groove is provided with two oppositely provided groove walls, and two corresponding limit protrusions are provided at the two groove walls respectively.

In an embodiment, a width of the first wire clamp groove is configured to gradually decrease in a direction from the first opening to the limit protrusion.

In an embodiment, a distance between the two limit protrusions is L₁, and L₁ satisfies 0.53 mm ≤ L₁ ≤ 0.58.

In an embodiment, the two limit protrusions are provided at a middle of the two groove walls respectively.

In an embodiment, the second wire clamp groove is provided with a periphery of the frame body, the second wire clamp groove is provided with a second opening, the second opening is configured to place a wire harness into the second wire clamp groove, and the second wire clamp groove is configured to penetrate through two opposite sides of a periphery of the frame body respectively to allow the wire harness to pass through.

In an embodiment, an outer peripheral edge of the second wire clamp groove adjacent to an inner side of the frame body is provided as an arc-shaped expansion port.

In an embodiment, a groove width of the second wire groove is L₂, and L₂ satisfies 0.58 mm ≤ L₂ ≤ 0.63 mm.

In an embodiment, the frame body is provided with a plurality of tooth sections for winding a winding towards an interior of the frame body, a plurality of first barriers are respectively provided at an outer side of the plurality of tooth sections adjacent to the frame body, a retaining edge is protrudingly provided at an outer side of the frame body, and the retaining edge and the plurality of first barriers are provided at intervals to limit a wire harness led out from the winding.

In an embodiment, the retaining edge is provided around the plurality of first barriers adjacent to the weld platform.

In an embodiment, a plurality of reinforcing ribs are provided at intervals at an outer periphery of the retaining edge.

In an embodiment, the plurality of second wire grooves are provided at intervals at the retaining edge.

The present application further proposes a stator assembly, including the aforementioned insulating frame, a stator core and a plurality of welding wire terminals, the plurality of welding wire terminals are provided at the installation position, and the insulating frame is provided at one side of the stator core.

In an embodiment, the weld platform is provided with a first surface, and an installation platform protrudes from the first surface, a first slot is provided at the installation platform, and the welding wire terminal is at least partially inserted into the first slot.

In an embodiment, the installation platform includes a first stage section and a second stage section connected to the first stage section, the welding wire terminal includes an insertion-and-connection portion and a welding portion, the insertion-and-connection portion is inserted into the first slot, the welding portion is provided at one side of the first stage section, and a height of the first stage section relative to the first surface is less than a height of the second stage section relative to the first surface.

In an embodiment, the height of the first stage section relative to the first surface is H, and H satisfies 0.3 mm ≤ H ≤ 0.6 mm.

In an embodiment, a side of the frame body adjacent to the stator core is provided with a plurality of insertion portions provided at intervals, the stator core is provided with a plurality of second slots corresponding to the insertion portions, and the plurality of insertion portions are respectively inserted into the plurality of second slots.

In an embodiment, an outer circumference of the stator core is provided with a plurality of protrusion structures provided at intervals, the protrusion structure is provided with an open pore, and an outer circumference of the insulating frame is provided with a plurality of positioning structures, and the positioning structure is aligned with the open pore.

In an embodiment, the protrusion structure includes two first protrusion portions and one second protrusion portion, a distance between the two first protrusion portions is less than a distance from either of the first protrusion portions to the second protrusion portion; two positioning structures are provided, and the two positioning structures respectively correspond to the open pores of the two first protrusion portions.

In an embodiment, the positioning structure includes a positioning platform protruding from an outer circumference of the frame body, and the positioning platform corresponds to the open pore.

In an embodiment, the positioning platform is provided with a positioning groove corresponding to the open pore.

In an embodiment, a groove wall of the positioning groove is curved to correspond to the open pore.

The present application further proposes a motor, the motor including the aforementioned stator assembly.

### BRIEF DESCRIPTION OF THE DRAWINGS

In order to explain the embodiments of the present application or the technical solutions in the existing technology more clearly, the accompanying drawings needed to be used in the description of the embodiments or the existing technology will be briefly introduced below. Obviously, the accompanying drawings in the following description are only some embodiments of the present application, other accompanying drawings can be obtained based on the provided accompanying drawings without exerting creative efforts for those skilled in the art.
FIG. 1 is a structural schematic view of a stator assembly of the present application, wherein an insulating frame and a stator core are separated.
FIG. 2 is a partial enlarged view of point A in FIG. 1.
FIG. 3 is a partial enlarged view of point B in FIG. 2.
FIG. 4 is a partial enlarged view of point C in FIG. 2.
FIG. 5 is a top view of an insulating frame.
FIG. 6 is a structural schematic view of a stator assembly.
FIG. 7 is a partial enlarged view of point D in FIG. 6.
FIG. 8 is a structural schematic view of a welding wire terminal.
FIG. 9 is a partial enlarged view of point E in FIG. 1.
FIG. 10 is a structural schematic view of a stator assembly of the present application, wherein an insulating frame and a stator core are separated.
FIG. 11 is a partial enlarged view of point F in FIG. 10.
FIG. 12 is a partial enlarged view of point G in FIG. 11.
FIG. 13 is a partial enlarged view of point H in FIG. 10.
FIG. 14 is a structural schematic view of a stator assembly of the present application from a top view.
FIG. 15 is a partial enlarged view of point I in FIG. 14.
FIG. 16 is a structural schematic view of a stator assembly of the present application, wherein an insulating frame and a stator core are separated.
FIG. 17 is a partial enlarged view of point J in FIG. 16.
FIG. 18 is a structural schematic view of a stator assembly of FIG. 14 from another view.
FIG. 19 is a structural schematic view of a stator assembly of the present application.
FIG. 20 is a partial enlarged view of point K in FIG. 19.
FIG. 21 is a structural schematic view of an insulating frame from a top view.
FIG. 22 is a structural schematic view of a welding wire terminal.
FIG. 23 is a structural schematic view of a stator assembly (where a welding wire terminal and an insulating frame are separated, and the insulating frame and a stator core are separated).

### Description of reference signs:

| reference sign | name | reference sign | name |
|---|---|---|---|
| 10 | stator assembly | 20 | insulating frame |
| 100 | frame body | 200 | weld platform |
| 300 | welding wire terminal | 400 | stator core |
| 500 | winding | 110 | second wire clamp groove |
| 111 | second opening | 120 | tooth section |
| 121 | first barrier | 122 | second barrier |
| 130 | retaining edge | 131 | reinforcing rib |
| 140 | insertion portion | 150 | positioning structure |
| 151 | positioning platform | 151a | positioning groove |
| 210 | first wire clamp groove | 211 | first opening |
| 212 | groove wall | 212a | limit protrusion |
| 220 | wire clamp platform | 230 | first surface |
| 231 | installation platform | 231a | first slot |
| 231b | first stage section | 231c | second stage section |
| 240 | installation position | 310 | insertion-and-connection portion |
| 320 | welding portion | 410 | second slot |
| 420 | protrusion structure | 421 | first protrusion portion |
| 422 | second protrusion portion | 423 | open pore |
| 610 | wire clamp groove | 620 | skirt edge |
| 132 | inclined guide surface | 113 | positioning portion |
| 710 | opening | 720 | notch groove |
| 112a | notch | 411 | positioning hole |
| 730 | socket | 810 | slot |
| 221a | first slot portion | 221b | second slot portion |
| 321 | extension segment | 222a | avoidance opening |
| 820 | second surface | | |

The realization of the purpose, functional features and advantages of the present application will be further described in conjunction with the embodiments and with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there is a directional indication (such as up, down, left, right, front, rear...) in the embodiments of the present application, the directional indication is only used to explain the relative positional relationship, movement, etc. of the components in a certain posture (as shown in the drawings). If the specific posture changes, the directional indication will change accordingly.

It should be noted that, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the meaning of "and/or" appearing in the present application includes three parallel scenarios. For example, "A and/or B" includes only A, or only B, or both A and B. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present application.

The wire harnesses leading from the windings of the stator in existing motors are typically connected to terminals for electrical connection to other control modules. Currently, commonly used connection methods include piercing terminals and wrapping terminal structures. Piercing terminals pose a risk of the BMC breaking the enameled wire at the piercing point, leading to substandard contact resistance and poor end-market performance. Wrapping terminals have low automation levels, reducing production efficiency by approximately half.

Therefore, the use of laser automated welding not only achieves a high degree of automation and high production efficiency, but also avoids the quality risks associated with puncture-type terminals, while simultaneously enabling automated operation when combined with laser welding.

Laser welding requires the wire harness to be as close to the terminals as possible. However, the wire harness leading from the winding often tilts upwards, resulting in poor laser welding results or low welding success rate.

In view of this, the present application proposes an insulating frame 20.

This insulating frame 20 is configured to install at one side of the stator core 400. The wire harness led out from the winding 500 is connected to the welding wire terminal 300 via laser welding method. Specifically, the laser welding method is laser soldering, which is a brazing method that uses laser as a heat source to melt to make the welded part fit tightly. Compared to traditional welding processes, this welding method has advantages such as faster heating speed, lower heat input, and greater heat impact. Furthermore, the welding position of laser soldering can be precisely controlled, the soldering amount can be precisely controlled, and the consistency of solder joints is high, which is more conducive to use in the welding process of small volume wire harness and terminals. The soldering process is fully automated, which is in line with the demand for production and processing efficiency.

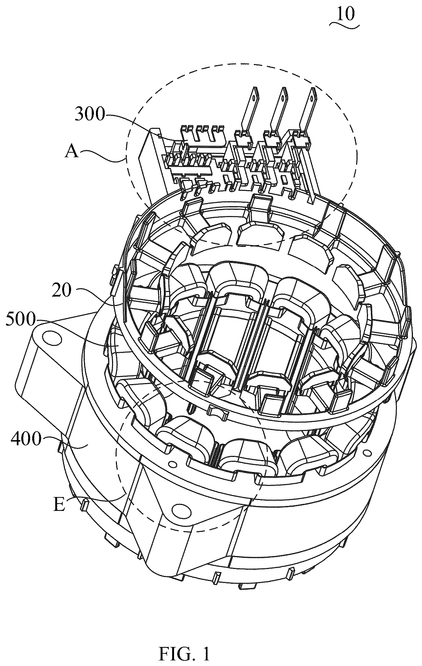

In this embodiment of the present application, as shown in FIG. 1 to FIG. 6, the insulating frame 20 is provided with a plurality of first wire clamp grooves 210 and a plurality of second wire clamp grooves 110, installation positions 240 are provided between the plurality of first wire clamp grooves 210 and the plurality of second wire clamp grooves 110, and the installation position 240 is configured to install a welding wire terminal 300.

Specifically, the insulating frame 20 is mainly configured to insulate the stator core 400 from the outside environment. The main body of the insulating frame 20 is made of insulating material. The stator core 400 is installed at the insulating frame 20. It can be that the stator core 400 is embedded in the insulating frame 20, or the stator core 400 is connected to the insulating frame 20, and the specific connection method can be snap-fit or plug-in, and no specific limitation is made here.

It should be noted that the winding 500 is wound on the stator teeth of the insulating frame 20 and the stator core 400. It should be noted that the stator core 400 is provided with a plurality of stator teeth, and the insulating frame 20 is provided with a plurality of tooth sections 120 corresponding to the plurality of stator teeth respectively. The winding 500 is wound together on the plurality of stator teeth and the plurality of tooth sections 120. The number of stator teeth and the number of tooth section 120 can be 6, or 8, or even 10 or 12.

It should be noted that the winding 500 is a collective term for a group of wire harnesses wound on a plurality of stator teeth and a plurality of tooth sections 120. The plurality of wire harnesses leading from the winding 500 are configured to weld to the welding wire terminal 300, thereby electrically connecting the motor to other components.

Considering that the welding process between the wire harnesses and the welding wire terminal 300 in this embodiment is laser automatic welding, the wire harnesses need to be sufficiently close to the welding wire terminal 300. However, the wire ends of the wire harnesses often curl up, leading to poor welding results in laser automatic welding. In view of this, the insulating frame 20 is provided with a plurality of first wire clamp grooves 210 and a plurality of second wire clamp grooves 110. The welding wire terminal 300 is located between any one of the wire clamp grooves and any one of the second wire clamp grooves 110, thus allowing the first wire clamp groove 210 and the second wire clamp grooves 110 to respectively restrict the wire harness to two positions on opposite sides of the welding terminal 300, thus preventing the wire harness from lifting adjacent to the welding point between the wire harness and the welding wire terminal 300. In addition, the first wire clamp groove 210 and the second wire clamp grooves 110 also serve to bundle the wire harness, making arrangement of the wire harness neater.

Each first wire clamp groove 210 can restrict only one wire harness, or two wire harnesses, or even more wire harnesses. No specific limit is placed on the number of wire harnesses here.

The technical solution of this application employs a first wire clamp groove 210 and a second wire clamp groove 110 provided at the insulating frame 20, and a welding wire terminal 300 is provided between the first wire clamp groove 210 and the second wire clamp groove 110. The wire harness is respectively clamped within the first wire clamp groove 210 and the second wire clamp groove 110, preventing the wire harness from tilting up adjacent to the welding wire terminal 300, thereby improving the welding quality of the welding wire terminal 300 and the wire harness via automatic laser welding, and increasing the welding yield of the welding wire terminal 300 and the wire harness.

In an embodiment, referring to FIG. 1, FIG. 2, FIG. 5, and FIG. 6, the insulating frame 20 includes a frame body 100 and a weld platform 200 connected to the frame body 100, the plurality of first wire clamp grooves 210 are provided at the weld platform 200, and the plurality of second wire clamp grooves 110 are provided at the frame body 100.

It should be noted that the insulating frame 20 includes a frame body 100 and a weld platform 200 connected to the frame body 100. The frame body 100 is roughly circular in shape, while the weld platform 200 protrudes from the outside of the frame body 100. A plurality of welding wire terminals 300 are connected to the weld platform 200, and the plurality of welding wire terminals 300 are spaced apart on the weld platform 200. The plurality of welding wire terminals 300 and the weld platform 200 can be glued, can be snap-fitted, or further can be soldered; no specific limitations are made here. Separately configuring the frame body 100 and the welding platform 200, only a portion of the welding platform 200 can be placed under the laser welding equipment during the automatic laser welding process, preventing the frame body 100 or other parts of the motor from being affected. The first wire clamp groove 210 is located on the weld platform 200, while a plurality of second wire clamp grooves 110 are located on the frame body 100. Considering that a plurality of welding wire terminals 300 are located on the weld platform 200, the first wire clamp groove 210 should be located on the side of the welding wire terminal 300 distant from the second wire clamp groove 110. Furthermore, the wire harness first passes through the second wire clamp groove 110 to the position of the welding wire terminal 300, and then reaches the first wire clamp groove 210. It can be that a plurality of wire harnesses is confined within a single second wire clamp groove 110 and then individually led out to a plurality of first wire clamp grooves 210. Alternatively, it can be that a plurality of wire harnesses is confined within a plurality of second wire clamp grooves 110 and then individually led out to a plurality of first wire clamp grooves 210. It further can be that a plurality of wire harnesses is confined within a plurality of second wire clamp grooves 110 and then led out to a single wire clamp groove.

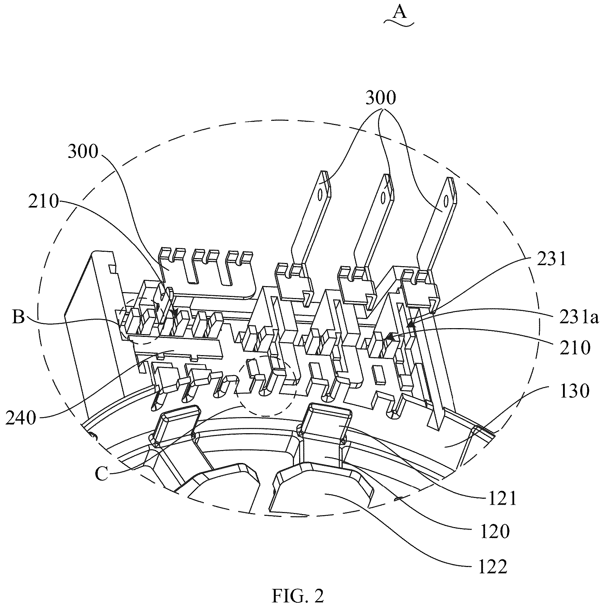

In an embodiment, referring to FIG. 2, the plurality of first wire clamp grooves 210 and the plurality of second wire clamp grooves 110 are provided in one-to-one correspondence.

Furthermore, as described in the previous embodiment, in this embodiment, a plurality of first wire clamp grooves 210 and a plurality of second wire clamp grooves 110 are provided in a one-to-one correspondence. That is, for any wire harness that passes through any one of the second wire clamp grooves 110, there is a corresponding first wire clamp groove 210. In this way, a plurality of wire harnesses can be arranged neatly and will not interfere with each other during the soldering process.

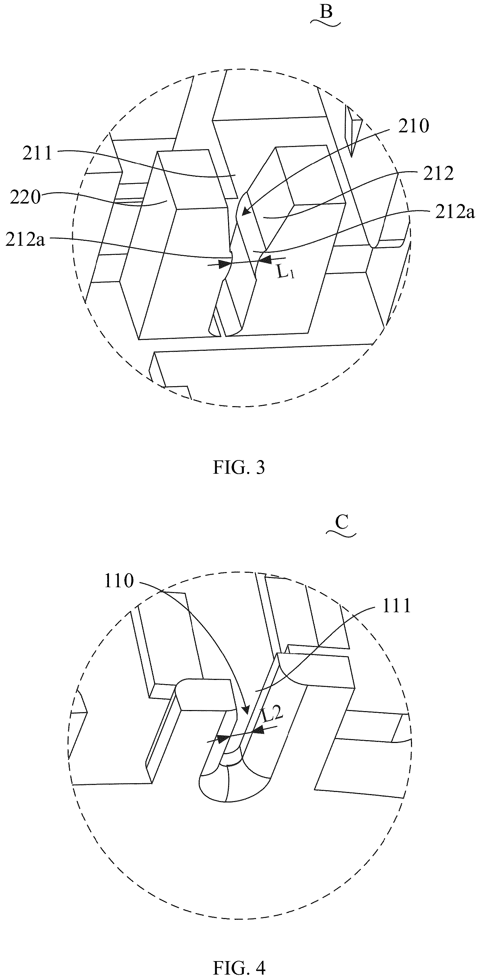

In an embodiment, referring to FIG. 2 and FIG. 3, the weld platform 200 is provided with a plurality of wire clamp platforms 220 provided at intervals, the plurality of first wire clamp grooves 210 are respectively provided at the plurality of wire clamp platforms 220, the first wire clamp groove 210 is provided with a first opening 211, the first opening 211 is configured to place a wire harness into the first wire clamp groove 210, and the first wire clamp groove 210 is configured to penetrate through two opposite wall surfaces of the wire clamp platform 220 respectively to allow the wire harness to pass through.

It should be explained in detail that the wire clamp platform 220 protrudes from the weld platform 200, and the first wire clamp groove 210 is formed on the wire clamp platform 220. Each wire clamp platform 220 is provided with only one first wire clamp groove 210, and each first wire clamp groove 210 only holds one wire harness. The first wire clamp groove 210 is provided with a first opening 211, allowing the wire harness to be placed into the first wire clamp groove 210 via the first opening 211, facilitating the securing of the wire harness within the first wire clamp groove 210, and the first wire clamp groove 210 penetrates through the two opposing wall surfaces of the wire clamp platform 220 along the lead-out path of the wire harness, allowing the wire harness to pass through and out of the first wire clamp groove 210.

For example, referring to FIG. 3, the first wire clamp groove 210 is provided with two oppositely provided groove walls 212, and two corresponding limit protrusions 212a are provided at the two groove walls 212 respectively.

It should be noted that the first wire clamp groove 210 is provided with two oppositely arranged groove walls 212, two groove walls 212 are each provided with a corresponding limit protrusion 212a, and the two limit protrusions 212a are integrally formed with the two groove walls 212 respectively. The setting of the two limit protrusions 212a reduces the distance between the two groove walls 212. The two limit protrusions 212a restrict the wire harness to the lower side of two limit protrusions 212a, preventing wire harness from moving above the limit protrusions 212a, thereby preventing the wire harness from being positioned too high within the first wire clamp groove 210. Furthermore, the limit protrusions 212a can be located at the upper part of the groove wall 212, can be located at the middle part of the groove wall 212, or even can be located at the lower part of the groove wall 212; no specific limitation is made here.

In an embodiment, referring to FIG. 3, a width of the first wire clamp groove 210 is configured to gradually decrease in a direction from the first opening 211 to the limit protrusion 212a.

As explained in the description of the aforementioned embodiments, the wire harness is placed into the first wire clamp groove 210 via the first opening 211. Further, to facilitate easier placement of the wire harness into the first wire clamp groove 210, the slot opening of the first wire clamp groove 210 is made open. Specifically, the width of the first wire clamp groove 210 gradually decreases from the first opening 211 to the limit protrusion 212a, while the width of the first slot below the limit protrusion 212a remains essentially constant.

In an embodiment, referring to FIG. 3, a distance between the two limit protrusions is L₁, and L₁ satisfies 0.53 mm ≤ L₁ ≤ 0.58.

It should be noted that the diameter of the wire harness in this embodiment is uniformly set to approximately 0.6 mm. To confine the wire harness below the limit protrusion 212a and prevent the wire harness from moving above the limit protrusion 212a, the distance between two limit protrusions 212a is set to be less than or equal to 0.58 mm. It should be further noted that the wire harness is made of copper, which has a slight elasticity. Therefore, the distance between the two limit protrusions 212a can be slightly smaller than the diameter of the wire harness. Considering that the wire harness needs to be smoothly placed from the first opening 211 into the first wire clamp groove 210, the distance between two limit protrusions 212a cannot be set too small; therefore, the distance between the two limit protrusions 212a is set to be greater than or equal to 0.53 mm. The distance between the two limit protrusions 212a can be any value within the range of 0.53 mm to 0.58 mm. It should also be noted that the surface of the limit protrusions 212a in this embodiment has a certain curvature, and L₁ represents the minimum distance between the two limit protrusions 212a.

Furthermore, referring to FIG. 3, the two limit protrusions 212a are provided at a middle of the two groove walls 212 respectively. According to the aforementioned embodiment, further, the middle of the groove wall 212 is located adjacent to half the groove depth of the entire first wire clamp groove 210. The limiting protrusion 212a is located in the middle of the groove wall 212. The height of the limiting protrusion 212a should not be too high, thus reducing the limiting effect of the limiting protrusion 212a; the height should not be too low, making it difficult to place the wire harness below the limiting protrusion 212a.

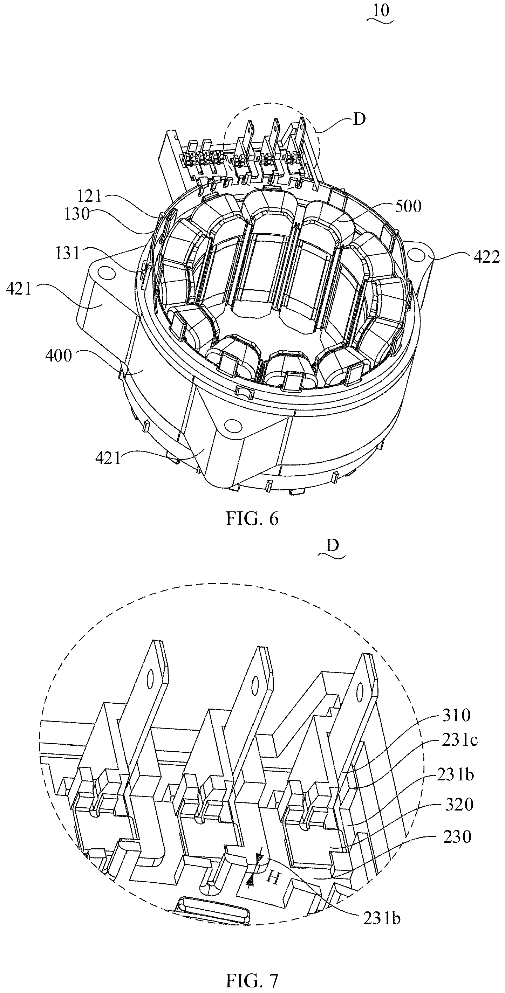

In an embodiment, referring to FIG. 2 and FIG. 6, the second wire clamp groove 110 is provided with a periphery of the frame body 100, the second wire clamp groove 110 is provided with a second opening 111, the second opening 111 is configured to place a wire harness into the second wire clamp groove 110, and the second wire clamp groove 110 is configured to penetrate through two opposite sides of a periphery of the frame body 100 respectively to allow the wire harness to pass through.

Specifically, the second wire clamp groove 110 is formed around the periphery of the frame body 100, the periphery of the frame body 100 may protrude in a direction distant from the stator core 400. The second wire clamp groove 110 is located adjacent to the weld platform 200. The second wire clamp groove 110 is provided with a second opening 111, so that the wire harness can be inserted into the groove via the second opening 111.Furthermore, the second wire clamp groove 110 penetrates the two opposing wall surfaces of the wire clamp platform 220 along the lead-out path of the wire harness, allowing the wire harness to pass through and out of the second wire clamp groove 110.

In an embodiment, referring to FIG. 4, an outer peripheral edge of the second wire clamp groove 110 adjacent to an inner side of the frame body 100 is provided as an arc-shaped expansion port.

Specifically, it should be noted that, to facilitate the introduction of the wire harness led out from the winding 500 into the second wire clamp groove 110, the outer circumference of the second wire clamp groove 110 adjacent to the inner side of the frame body 100 is flared outwards, and this flare is designed in an arc shape, which is smoother than other shapes with sharp edges, making it easier to introduce the wire harness into the second wire clamp groove 110.

In an embodiment, referring to FIG. 4, a groove width of the second wire groove 110 is L₂, and L₂ satisfies 0.58 mm ≤ L₂ ≤ 0.63 mm.

Specifically, in this embodiment, the diameter of the wire harness is approximately 0.6 mm. It should be noted that the wire harness has a certain degree of elasticity. Considering that the second wire clamp groove 110 needs to prevent the wire harness from tilting upwards, the width of the second wire clamp groove 110 is set to be less than or equal to 0.63 mm. Further considering that the wire harness needs to pass through the second wire clamp groove 110 and then into the first wire clamp groove 210, so that the width of the second wire clamp groove 110 should not be too small; therefore, the width of the second wire clamp groove 110 is set to be greater than or equal to 0.58 mm. Thus, the width of the second wire clamp groove 110 can be any value within the range of 0.58 mm to 0.63 mm.

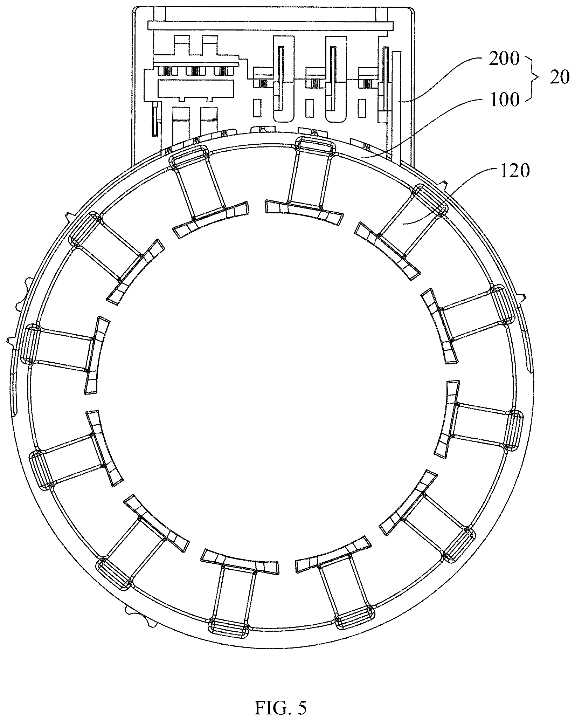

In an embodiment, referring to FIG. 2 and FIG. 5, the frame body 100 is provided with a plurality of tooth sections 120 for winding a winding 500 towards an interior of the frame body 100, a plurality of first barriers 121 are respectively provided at an outer side of the plurality of tooth sections adjacent to the frame body 100, a retaining edge 130 is protrudingly provided at an outer side of the frame body 100, and the retaining edge 130 and the plurality of first barriers 121 are provided at intervals to limit a wire harness led out from the winding 500.

It should be noted that, in order to prevent the winding 500 wrapped around the tooth section 120 at the wall surface from falling off into the insertion portion 140, a plurality of first barriers 121 are provided at the outer side adjacent to the frame body 100, and the first barrier 121 and the tooth section 120 are provided in one-to-one correspondence. In addition, a plurality of second barriers 122 are provided at the inner side of the tooth section 120 adjacent to the frame body 100, the plurality of second barrier 122 and the tooth section 120 are provided in one-to-one correspondence, and the plurality of second barriers 122 and the first barrier 121 are also provided in one-to-one correspondence, respectively limiting the opposite sides of the winding 500 to prevent the winding 500 from falling off the tooth section 120. The frame body 100 extends outwards in a direction distant from the stator core 400, forming retaining edges 130. The retaining edge 130 and a plurality of first barriers 121 are provided at intervals to limit the wire harness led out from the winding 500. The first barriers 121 and second barriers 122 are respectively injection molded together with the tooth section 120.

This arrangement is because the conventional design for the wire harness led out from the limiting winding 500 involves a plurality of staggered locking blocks on the outer side of the first barrier 121 adjacent to the frame body 100, securing the wire harness of the winding 500 between these blocks. However, this method is prone to causing the wire harness to break due to stretching during injection molding of the insulating frame 20, the motor housing, or other components. Therefore, the aforementioned method is used to prevent the wire harness from being stretched, deformed, or even broken.

In an embodiment, referring to FIG. 1 and FIG. 2, the retaining edge 130 is provided around the plurality of first barriers 121 adjacent to the weld platform 200.

It should be noted that it can be that the winding 500 on every tooth section 120 will lead out a wire harness, or it can be that only a portion of the winding 500 on the tooth section 120 will lead out a wire harness. When the winding 500 on every tooth section 120 leads to a wire harness, the retaining edge 130 needs to be set around the entire first barrier 121. However, in this embodiment, only the winding 500 on the tooth section 120 of the plurality of first barrier 121 adjacent to the welding platform 200 will lead out a wire harness. Therefore, the barrier only needs to be set around these aforementioned winding 500s. Thus, in this embodiment, the barrier is set around half of the outer circumference of the frame body 100. It should be noted that the number of the plurality of first barrier 121 here can be three, four, or six; no specific limitation is made here.

In an embodiment, referring to FIG. 6, a plurality of reinforcing ribs 131 are provided at intervals at an outer periphery of the retaining edge 130.

Considering that the retaining edge 130 is relatively thin, a plurality of reinforcing ribs 131 are provided at intervals at the outer circumference of the retaining edge 130 to strengthen the structure of the retaining edge 130 and prevent the retaining edge 130 from breaking or shattering.

In an embodiment, referring to FIG. 2 and FIG. 6, the plurality of second wire grooves 110 are provided at intervals at the retaining edge 130.

In the above embodiment, the plurality of second wire clamp grooves 110 are provided at the outer circumference of the frame body 100. As described in the above embodiment, a retaining edge 130 is provided at the outer circumference of the frame body 100, and the retaining edge 130 is adjacent to the weld platform 200. Therefore, the plurality of second wire clamp grooves 110 are spaced apart at the retaining edge 130.

The present application further proposes a stator assembly 10, including the aforementioned insulating frame 20, the stator assembly 10 further includes a stator core 400 and a plurality of welding wire terminals 300, the plurality of welding wire terminals 300 are provided at the installation position 240, and the insulating frame 20 is provided at one side of the stator core 400. The specific structure of the insulating frame 20 is as described in the above embodiments. Since this motor adopts all the technical solutions of all the above embodiments, it possesses at least all the beneficial effects brought about by the technical solutions of the above embodiments, which will not be elaborated further here.

In an embodiment, referring to FIG. 7, the weld platform 200 is provided with a first surface 230, and an installation platform 200 protrudes from the first surface 230, a first slot 231a is provided at the installation platform 231, and the welding wire terminal 300 is at least partially inserted into the first slot 231a.

It should be noted that the weld platform 200 is provided with a first surface 230, the first surface 230 is located at the side distant from the stator core 400. It should be noted that the first surface 230 is provided with an installation platform 231 for installing the welding wire terminal 300. The specific method is as follows: the installation platform 231 is provided with a first slot 231a, the welding wire terminal 300 is inserted into the first slot 231a. It can be that inserting the entire welding wire terminal 300 into the first slot 231a, or it can be that inserting only a portion of the welding wire terminal 300 into the first slot 231a. Considering that a portion of the welding wire terminal 300 needs to be welded externally, in this embodiment, inserting only a portion of the welding wire terminal 300 into the first slot 231a. The slot opening of the first slot 231a corresponds to the welding wire terminal 300, which is provided in a strip shape.

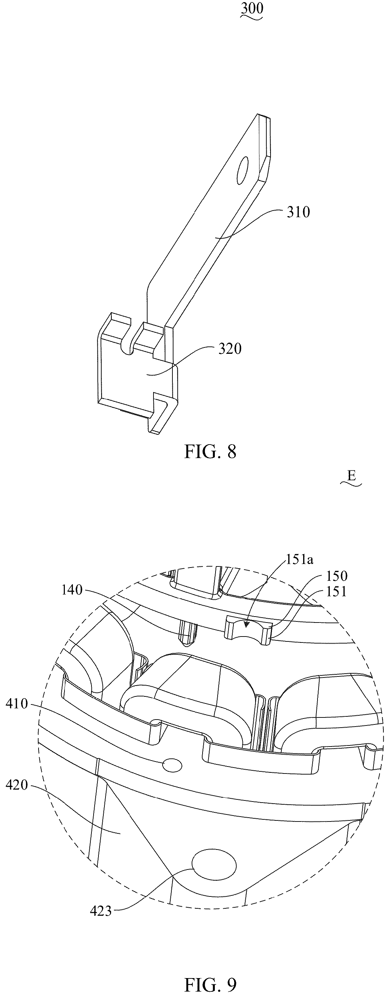

Furthermore, referring to FIG. 7 and FIG. 8, the installation platform 231 includes a first stage section 231b and a second stage section 231c connected to the first stage section 231b, the welding wire terminal 300 includes an insertion-and-connection portion 310 and a welding portion 320, the insertion-and-connection portion 310 is inserted into the first slot 231a, the welding portion320 is provided at one side of the first stage section 231b, and a height of the first stage section 231b relative to the first surface 230 is less than a height of the second stage section 231b relative to the first surface 230.

It should be noted that the installation platform 231 includes a first stage section 231b and a second stage section 231c connected to each other. In this embodiment, the first stage section 231b and the second stage section 231c are integrally injection molded. The welding wire terminal 300 includes two parts: the first part is the insertion-and-connection portion 310, that is, the part that inserts into the first slot 231a; the second part is the welding portion 320, that is, the part used for laser welding to the wire harness. The welding portion 320 is located at one side of the first stage section 231b. Considering the diffuse reflection phenomenon that occurs during laser welding, and the still relatively high temperature of the reflected light, and the first stage section 231b is too close to the welding portion 320, which could potentially cause a fire. Therefore, an avoidance setting is designed to the first stage section 231b, to cause that the height of the first stage section 231b relative to the first surface 230 is smaller than the height of the second stage section 231c relative to the second surface, reducing the height of the first stage section 231b, thereby significantly lowering the risk of fire caused by laser diffuse reflection.

Additionally, the welding wire terminal 300 may also only have a welding portion 320. The welding wire terminal 300 structure in this embodiment is one type of welding wire terminal 300 structure, and does not mean that all welding wire terminal 300 structures in the above embodiments are the same as the welding segment structure in this embodiment, nor does it mean that all welding wire terminal 300 structures in this solution are the same as the structure described in this embodiment.

Furthermore, referring to FIG. 7, the height of the first stage section 231b relative to the first surface 230 is H, and H satisfies 0.3 mm ≤ H ≤ 0.6 mm.

It should be noted that, considering that the height of the first stage section 231b relative to the first surface 230 should not be too high, otherwise there may be a potential fire risk in the first stage section 231b, therefore the height of the first stage section 231b relative to the first surface 230 is set to be less than or equal to 0.60 mm. In addition, a second slot 410 for the insertion-and-connection portion 310 to be inserted is formed on the first stage section 231b. Therefore, the height of the first stage section is greater than or equal to 0.3 mm, so that the insertion-and-connection portion 310 is limited by the opposite sides of the first stage section 231b.

In an embodiment, referring to FIG. 1, FIG. 6, and FIG. 9, a side of the frame body 100 adjacent to the stator core 400 is provided with a plurality of insertion portions 140 provided at intervals, the stator core 400 is provided with a plurality of second slots 410 corresponding to the insertion portions 140, and the plurality of insertion portions 140 are respectively inserted into the plurality of second slots 410.

Specifically, the plurality of insertion portions 140 and the plurality of second slots 410 are respectively provided in one-to-one correspondence. In this embodiment, the insertion portion 140 is cylindrical, but it can also be prismatic, pyramidal, or any other shape. The shape of the second slot 410 matches that of the first slot 231a. The cooperation between the insertion portion 140 and the second slot 410 has a positioning effect on the insulating frame 20 and the stator core 400, as well as a fixing and assembly effect. There can be two, three, or more of the insertion portions 140 and second slots 410; no specific limitation is made here.

In an embodiment, referring to FIG. 1, FIG. 6, and FIG. 9, an outer circumference of the stator core 400 is provided with a plurality of protrusion structures 420 provided at intervals, the protrusion structure 420 is provided with an open pore 423, and an outer circumference of the insulating frame is provided with a plurality of positioning structures 150, and the positioning structure 150 is aligned with the open pore 423.

It should be noted that, in this embodiment, each protrusion structure 420 is provided with only one open pore 423, and the open pore 423 is approximately located in the middle of the protrusion structure 420. The outer circumference of the insulating frame is provided with an alignment structure corresponding to the open pore 423. This alignment structure can be a protrusion, a groove, or a hole; no specific limitation is made here. By aligning the positioning structure 150 with the open pore 423, the insulating frame and the stator core 400 are aligned and installed.

In an embodiment, referring to FIG. 1, FIG. 6, and FIG. 9, the protrusion structure 420 includes two first protrusion portions 421 and one second protrusion portion 422, a distance between the two first protrusion portions 421 is less than a distance from either of the first protrusion portions 421 to the second protrusion portion 422; two positioning structures 150 are provided, and the two positioning structures 150 respectively correspond to the open pores 423 of the two first protrusion portions 421.

It should be noted that, considering the significant positional distance difference between the second protrusion portion 422 and the two first protrusion portions 421, only two positioning structures 150 are needed to ensure the alignment of the positioning structure 150 and the open pore 423. This arrangement reduces the mold-making cost of the insulating frame 20.

In an embodiment, referring to FIG. 1, FIG. 6, and FIG. 9, the positioning structure 150 includes a positioning platform 151 protruding from an outer circumference of the frame body 100, and the positioning platform 151 corresponds to the open pore 423.

As described in the above embodiments, the positioning structure 150 is a protruding positioning platform 151. The positioning platform 151 aligns with the open pore 423 to achieve alignment between the insulating frame 20 and the stator core 400.

Furthermore, referring to FIG. 1, FIG. 6, and FIG. 9, the positioning platform 151 is provided with a positioning groove 151a corresponding to the open pore 423.

Based on the above embodiments, the positioning platform 151 is further provided with a positioning groove 151a. When the positioning groove 151a aligns with the open pore 423, the insulating frame 20 and the stator core 400 can be aligned, thus improving the alignment accuracy of the insulating frame 20 and the stator core 400 compared to the above embodiments.

Furthermore, referring to FIG. 1, FIG. 6, and FIG. 9, a groove wall 212 of the positioning groove 151a is curved to correspond to the open pore 423.

Based on the above embodiment, the groove wall 212 of the positioning groove 151a is curved, corresponding to the open pore 423. Thus, when the groove wall 212 of the positioning groove 151a coincides or misaligns with the pore wall of the open pore 423, the alignment of the insulating frame 20 and the stator core 400 is ensured, further enhancing the alignment accuracy of the insulating frame 20 and the stator core 400 compared to the above embodiment.

In existing motors, the wire harness led out from the stator winding is typically connected to terminals for electrical connection to other control modules. The wire harness leading out from the winding is typically confined to the outside of a barrier on the insulating frame. Several protrusions are offset on the outside of the barrier to position the wire harness among the several protrusions. However, after the wire harness is positioned, the wire harness may be subjected to significant pressure during injection molding, potentially leading to tearing or breakage.

In view of this, the present application proposes an insulating frame 20.

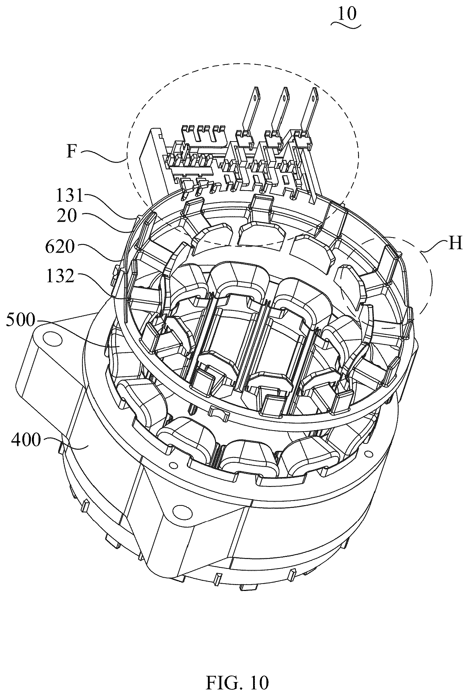

In embodiments of the present application, as shown in FIG. 10, FIG. 11, and FIG. 5, the insulating frame includes a ring-shaped frame body 100. The inner side of the frame body 100 is provided with a plurality of tooth sections 120 for winding the winding 500. The frame body 100 is also provided with a plurality of first barriers 121 protruding along its axial direction. An outer periphery of the frame body 100 is configured to extend along an axial direction of the frame body to form a skirt edge 620, the skirt edge 620 is configured to extend along an axial direction of the frame body 100, the skirt edge 620 is provided at an outer periphery of the plurality of first barriers 121, and a gap is provided between the skirt edge 620 and the plurality of skirt edges 121 for bundling a wire harness led out from the winding 500.

It should be noted that the frame body 100 is installed at the stator core 400. The frame body 100 is provided with an open pore in its center, and a plurality of tooth sections 120 protrude inwards from an inner side of the frame body 100. These tooth section 120 correspond to a plurality of stator teeth on the stator core 400. The winding of the winding 500 is wound around these stator teeth and these tooth sections 120. The winding 500 wound around the stator teeth and tooth sections 120 will lead out the wire harness. However, it should be noted that it could be that all the winding 500 wound around the stator teeth and tooth sections 120 will lead out the wire harness, or it could be that only some of the winding 500 wound around the stator teeth and tooth sections 120 will lead out the wire harness; no specific limitation is made here. The tooth section 120 is integrally molded with the frame body 100 within the mold.

The number of tooth section 120 corresponds to the number of stator teeth; the number of tooth section 120 can be 6, 8, 10, 12, or even more, without specific limitation here.

First, the frame body 100 is provided with a plurality of first barriers 121 arranged along its axial direction. The plurality of barriers 121 may respectively correspond to a plurality of tooth sections 120, or may not correspond to a plurality of tooth sections 120. Based on this, a skirt edge 620 is further formed along the axial direction of the frame body 100 on the outer periphery of the frame body 100. That is, the skirt edge 620 is located on the periphery of a plurality of first barriers 121, and there must be a gap between the skirt edge 620 and the plurality of first barriers 121 so that the wire harness can pass through between them. The wire harness led out from the winding 500 is attached to the inner wall of the skirt edge 620, thereby organizing the wire harness group. This method can also prevent the wire harness from being deformed, damaged or even broken by pressure and tension during the injection molding of the insulating frame 20 and other components.

The technical solution of the present application employs a plurality of first barriers 121 and skirt edges 620 respectively arranged axially on the frame body 100, places the wire harness leading out from the winding 500 within the gap between them, preventing the wire harness from being stretched, damaged, or even broken under pressure during injection molding of the insulating frame 20 and other components.

Furthermore, referring to FIG. 10 to FIG. 12, the plurality of first barriers 121 correspond one-to-one with the plurality of tooth sections 120.

It should be noted that the function of the plurality of first barriers 121 is not limited to limiting the wire harnesses leading out from the plurality of windings 500. Considering that the windings 500 are wound on the tooth section 120, the first barriers 121 correspond to the tooth section 120. That is, the first barriers 121 can limit the windings 500 to the side adjacent to the first barrier 121, making the wire harnesses of the windings 500 neat and preventing the windings 500 from being arranged messily, thus affecting the injection molding of the insulating frame 20 structure.

In an embodiment, referring to FIG. 10, FIG. 11, and FIG. 5, the insulating frame 20 further includes a weld platform 200 connected to the frame body 100, and the skirt edge 620 is provided between the weld platform 200 and the plurality of first barriers 121.

Specifically, the weld platform 200 is configured to weld the wire harness led out from the winding 500 to the terminals. In this embodiment, the welding platform 200 is a square platform, but it can also be other shapes. Specifically, in this embodiment, the wire harness led out from the winding 500 is connected to the welding wire terminal via laser welding. The specific laser welding method is laser soldering, which is a brazing method that uses laser as a heat source to melt to make the welded part fit tightly. Compared to traditional welding processes, this welding method has advantages such as faster heating speed, lower heat input, and greater heat impact. Furthermore, the welding position of laser soldering can be precisely controlled, the soldering amount can be precisely controlled, and the consistency of solder joints is high, which is more conducive to use in the welding process of small volume wire harness and terminals. The soldering process is fully automated, which is in line with the demand for production and processing efficiency.

In this embodiment, the skirt edge 620 is only provided at the outer side of a plurality of first barrier 121 adjacent to the weld platform 200. It should be noted that the barrier in this embodiment is provided with twelve tooth sections 120, and twelve first barrier 121s are provided corresponding to the twelve tooth sections 120. Only the windings 500 on the tooth section 120 of the six first barriers 121 adjacent to the weld platform 200 have outgoing wire harnesses. Therefore, the skirt edge 620 only needs to surround the outer side of these six first barrier 121s. Certainly, embodiments with a barrier surrounding all tooth sections 120 are also within the scope of the aforementioned embodiments.

Exemplarily, a ratio of a length of the skirt edge 620 along a circumferential direction of the frame body 100 to a circumference of the frame body 100 is in a range of 1/4 to 1. Furthermore, a length of the skirt edge 620 along a circumferential direction of the frame body 100 is half of a circumference of the frame body 100.

According to the above description, only six of the twelve tooth sections 120 have windings 500 with outgoing wire harnesses. Since the twelve tooth sections 120 are evenly spaced in the circumferential direction of the frame body 100, the length of the skirt edge 620 in the circumferential direction of the frame body 100 only needs to be half the circumference of the frame body 100 to satisfy the requirement of the wire harness being led out from the windings 500. However, the above embodiments are merely some embodiments of the present application and are not limited to these embodiments. The number of tooth sections 120 and the first barriers 121 can be less than twelve or more than twelve. The number of tooth sections 120 with outgoing wire harnesses can be half, more than half of all tooth sections 120, or less than half of all tooth sections 120. Therefore, the ratio of the length of the skirt edge 620 in the circumferential direction of the frame body 100 to the circumference of the frame body 100 is limited to 1/4 to 1.

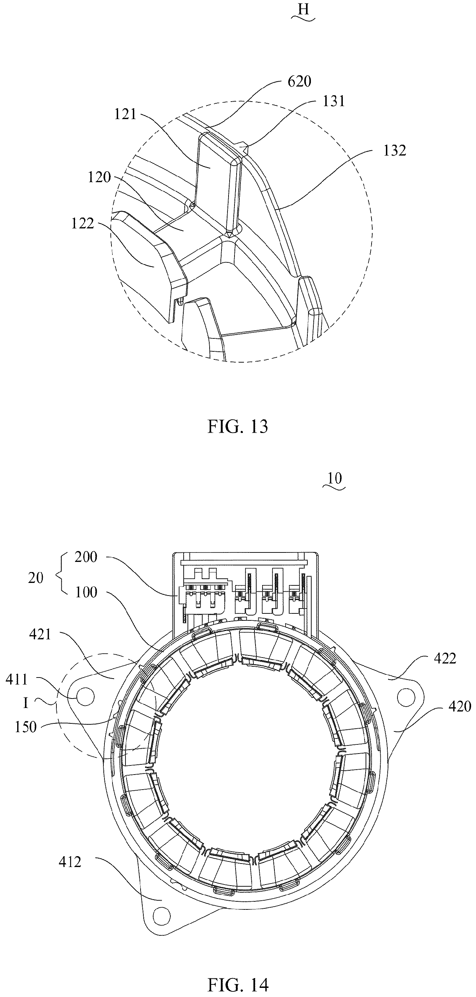

In an embodiment, referring to FIG. 10 and FIG. 13, the skirt edge 620 is provided with inclined guide surfaces 132 at both ends along the circumferential direction of the frame body 100.

It should be noted that, in order to strengthen the structural strength of both ends of the frame body 100 in the circumferential direction, inclined guide surfaces 132 are provided at both ends. This reduces the impact force on the skirt edge 620 during BMC injection molding and prevents the skirt edge 620 from being exposed outside the circumference of the frame body 100.

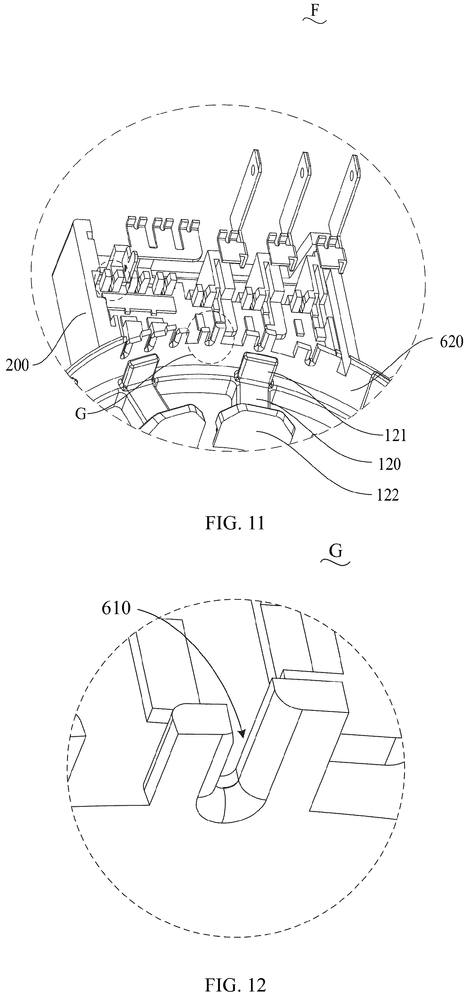

In an embodiment, referring to FIG. 11 and FIG. 12, a side of the skirt edge 620 adjacent to the weld platform 200 is provided with a plurality of wire clamp grooves 610.

It should be noted that the wire harness led out from the winding 500 needs to be further introduced from the frame body 100 to the weld platform 200 for automatic laser welding; therefore, wire clamp grooves 610 are provided at the side of the skirt edge 620 adjacent to the weld platform 200. On the one hand, the wire clamp groove 610 is provided to allow the wire harness to pass through the skirt edge 620 and enter the weld platform 200. On the other hand, the wire clamp groove 610 also functions to restrict the position of the wire harness. In the present application, the diameter of the wire harness is approximately 0.6 mm, while the width of the wire clamp groove 610 is set between 0.58 mm and 0.63 mm. Therefore, the width of the wire clamp groove 610 is essentially the same as the diameter of the wire harness, thus effectively restricting the wire harness and preventing it from tilting upwards, which could lead out poor welding results.

In an embodiment, referring to FIG. 12, an outer peripheral edge of the wire clamp groove 610 adjacent to an inner side of the frame body 100 is provided as an arc-shaped expansion port.

Specifically, it should be noted that, to facilitate the introduction of the wire harness led out from the winding 500 into the wire clamp groove 110, the outer circumference of the wire clamp groove 110 adjacent to the inner side of the frame body 100 is flared outwards, and this flare is designed in an arc shape, which is smoother than other shapes with sharp edges, making it easier to introduce the wire harness into the wire clamp groove 610.

In an embodiment, referring to FIG. 10, a plurality of reinforcing ribs 131 are provided at intervals at an outer circumference of the skirt edge 620.

Considering that the skirt edge 620 is relatively thin, a plurality of reinforcing ribs 131 are provided at intervals on the outer circumference of the skirt edge 620 to strengthen the structure of the skirt edge 620 and prevent the skirt edge 620 from breaking or shattering. Secondly, the reinforcement rib 131 also ensures structural stability during injection molding, increasing the skirt edge 620's resistance to impact forces.

Referring to FIG. 10 to FIG. 12, a plurality of second barriers 122 are respectively provided at positions of the plurality of tooth sections distant from the frame body 100, and the plurality of second barriers 122 correspond one-to-one with the plurality of first barriers 121.

Furthermore, considering that a plurality of first barriers 121 are provided to limit the side of the winding 500 adjacent to the barrier, a plurality of second barriers 122 are provided in this embodiment. The second barriers 122 are distant from the outer circumference of the frame body. The second barriers 122 and the first barriers 121 respectively limit the winding 500 wound on the tooth section 120 on opposite sides of the tooth section 120, so that the arrangement of the winding 500 is neat and beautiful.

In an embodiment, referring to FIG. 10 and FIG. 5, the frame body 100 is arranged in a ring shape.

Furthermore, in this embodiment, the frame body 100 is ring-shaped, thus corresponding to the shape of the stator core 400 and providing good protection for the structure of the stator core 400.

An insulating frame is generally installed at the stator core of a motor to insulate the stator core. The insulating frame is typically installed at the stator core. A common assembly method is a plug-in connection between the stator core and the insulating frame. However, during this plug-in connection process, technicians operate from a top-down view, which does not allow them to see the plug-in structure, making it difficult to align the plug-in structure makes the plug-in mating of the insulating frame and the stator core challenging.

Therefore, the present application proposes a stator assembly 10.

In this embodiment of the application, as shown in FIG. 14 to FIG. 18, the stator assembly 10 includes a stator core 400 and an insulating frame 20. The outer circumference of the stator core 400 is provided with a plurality of protrusion structures 420 provided at intervals. The insulating frame 20 is installed at the stator core 400. The insulating frame 20 includes a frame body 100, a positioning portion 113 is provided at a side of the frame body 100 adjacent to the stator core 400, the stator core 400 is provided with a socket 730 adapted to the positioning portion 113, and the positioning portion 113 matches the socket 730; and
a plurality of positioning structures 150 are provided on an outer circumference of the frame body 100; in response to that the positioning portion 113 is fitted with the socket 730, the positioning structure 150 corresponds to the protrusion structure 420.

Specifically, the stator assembly 10 mainly consists of a stator core 400 and an insulating frame 20 installed at the stator core 400. After the stator core 400 and insulating frame 20 are assembled, the winding 500 is wound around the stator core 400 and insulating frame 20. The stator core 400 is provided with a plurality of stator teeth protruding inwards, and the insulating frame 20 is provided with a plurality of tooth sections corresponding to the plurality of stator teeth, and the plurality of tooth sections and the plurality of stator teeth are provided in a one-to-one correspondence. The winding 500 is wound on each stator tooth and tooth section.

The outer circumference of the stator core 400 is provided with a plurality of protrusion structures spaced apart. These protrusion structures 420 are used for assembly with the motor housing. The number of protrusion structures 420 can be two, three, or more; no specific limitation is made here.

The insulating frame 20 includes at least a frame body 100. The frame body 100 is a frame design with an internal opening. The frame body 100 can be a square, elliptical, or circular frame; in this embodiment, the main body of the stator core 400 is annular, therefore the frame body 100 is also annular. The insulating frame 20 can have only the frame body 100, or can have other parts besides the frame body 100; no specific limitation is made here.

The insulating frame 20 and the stator core 400 can be connected by an interference fit, a plug-in structure, or even a snap-fit structure. In this embodiment, the insulating frame 20 and the stator core 400 are connected by a plug-in fit. A positioning portion 113 is provided at the frame body 100, and a socket 730 that mates with the positioning portion 113 is provided at the stator core 400. The positioning portion 113 is inserted into the socket 730 to fix the relative position of the insulating frame 20. Since both the frame body 100 and the stator core 400 are annular, the plug-in fit also prevents the insulating frame 20 from rotating relative to the stator core 400. Certainly, in other embodiments, a positioning portion 113 may be provided at the stator core 400, and a socket 730 may be provided at the insulating frame 20. This method can be derived by those skilled in the art based on the above embodiments.

It should be noted that when the operator assembling the stator assembly 10 installs the insulating frame 20 onto the stator core 400, the operator is viewing the stator assembly 10 from a top-down perspective. Since the positioning portion 113 and the socket 730 in this embodiment are relatively small, it is difficult to accurately align them using a blind view during assembly. Therefore, a plurality of positioning structures 150 are provided at the outer circumference of the frame body 100. These positioning structures 150 serve as a foolproof mechanism. The positioning structures 150 are aligned with the protrusion structure 420 on the outer circumference of the stator core 400, thereby reducing the difficulty of inserting the positioning portion 113 into the socket 730 and reducing the assembly difficulty of the insulating frame 20 and the stator core 400. It should be noted that the alignment of the positioning structure 150 and the protrusion structure 420 is such that, when the positioning portion 113 matches the socket 730, the positioning structure 150 is located adjacent to the protrusion structure 420, or the positioning structure 150 and the protrusion structure 420 partially overlap, or the positioning structure 150 and the protrusion structure 420 completely overlap. The above solutions are all solutions of this embodiment. The plurality of positioning structures 150 and the plurality of protrusion structures 420 can be provided in one-to-one correspondence, or it can be the plurality of positioning structures 150 correspond to portions of a plurality of protrusion structures 420; no specific limitation is made here.

The shape of the positioning structure 150 can be a protrusion on the periphery of the frame body 100, or a recess on the periphery of the frame body 100, or a combination of the two forms mentioned above, or even other structures, or a combination of other structures, without being specifically limited here.

The technical solution of the present application employs a plurality of positioning structures 150 on the periphery of the frame body 100. These positioning structures 150 are aligned with the protrusion structure 420 on the outer circumference of the stator core 400, facilitating the insertion and engagement of the positioning portion 113 of the frame body 100 with the socket 730 on the stator core 400, which is a foolproof design for operators assembling the stator assembly 10.

In an embodiment, referring to FIG. 14 to FIG. 18, each protrusion structure 420 is provided with a positioning hole 411, and the positioning structure 150 corresponds to the positioning hole 411.

Specifically, the protrusion structure 420 is provided with a positioning hole 411, the positioning hole 411 is opposite to the positioning structure 150, resulting in better alignment between the positioning structure 150 and the positioning hole 411, thus improving the alignment between the positioning portion 113 and the socket 730. The positioning hole 411 can be circular, square, or irregularly shaped. In this embodiment, the positioning hole 411 on the protrusion structure 420 also has the function of assembling with other structures, specifically by engaging with pins. Therefore, the shape of the positioning hole 411 is set to be circular. It should be noted that the positioning structure 150 and the positioning hole 411 are aligned such that, when the positioning portion 113 matches the socket 730, the positioning structure 150 is located adjacent to the positioning hole 411, or positioning structure 150 and the positioning hole 411 partially overlap, and the positioning structure 150 and the positioning hole 411 completely overlap. The above solutions are all solutions of this embodiment.

In an embodiment, referring to FIG. 14 to FIG. 18, the positioning structure 150 protrudes from the outer circumference of the frame body 100.

It should be noted that, as shown in the figure, the positioning structure 150 is protruding from the outer periphery of the frame body 100 and is positioned as close as possible to the positioning hole 411, so as to make the alignment of the positioning structure 150 and the positioning hole 411 easier and more effective, thereby making it easier for the positioning portion 113 to be inserted into the socket 730, facilitating the operator's work and the insulating frame 20 and stator core 400 can be assembled in one go.

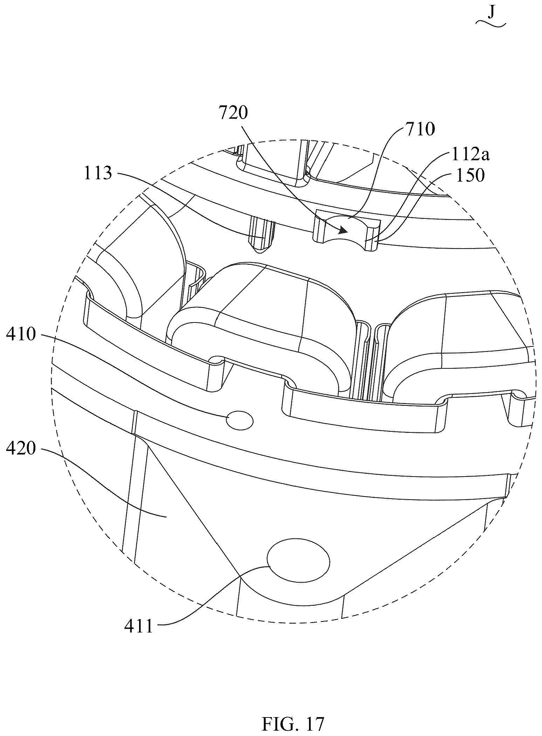

For example, referring to FIG. 17, the positioning structure 150 is provided with an opening 710 corresponding to the positioning hole 411.

Based on the aforementioned embodiments, the positioning structure 111 is further designed, an opening 710 is provided at the position corresponding to the positioning hole 411. The structure of the opening 710 corresponds to the structure of the positioning hole 411, resulting in better alignment between the positioning structure 111 and the positioning hole 411, and facilitating the assembly of the insulating frame 20 and the stator core 400.

In an embodiment, referring to FIG. 17, the positioning hole 411 is circular, and a groove wall of the notch groove 720 corresponding to the positioning hole 411 is arc-shaped.

Furthermore, since the positioning hole 411 is circular, the groove wall of the notch groove 720 is made into an arc surface, making the alignment of the notch groove 720 and the positioning hole 411 more precise and the alignment effect better, thereby making it easier for the positioning portion 113 to mate with the socket 730. Certainly, the positioning hole 411 can also be square, and the notch groove 720 can be square accordingly. This solution is also within the scope of the above embodiment.

In an embodiment, referring to FIG. 17, the opening 710 penetrates through the opposite sides of the positioning structure 150 to form a notch groove 720, the notch groove 720 is provided with a notch 112a facing away the frame body 100, and the notch 112a corresponds to the positioning hole 411.

The notch groove 720 is provided with a notch 112a facing away the frame body 100. The notch 112a corresponds to the positioning hole 411. Specifically, the projection of the notch 112a onto the protrusion structure 420 faces the positioning hole 411, so that the square shape of the slot opening 112a corresponds to the square shape of the positioning hole 411, thereby making the alignment of the notch groove 720 and the positioning hole 411 more precise, facilitating to assembly the insulating frame 20 and stator core 400 in one go

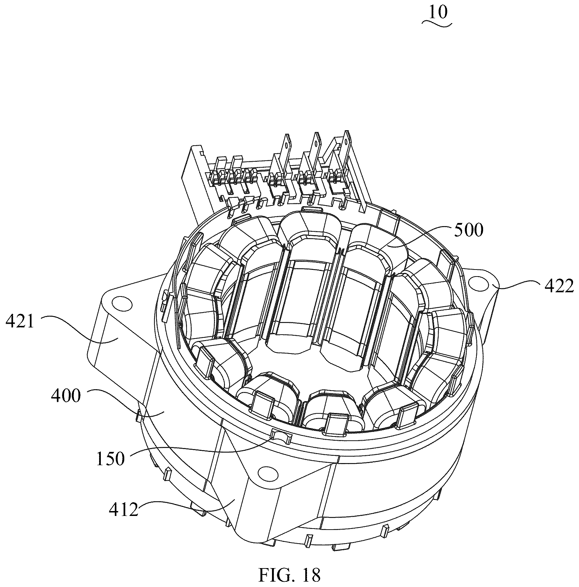

In an embodiment, referring to FIG. 14 and FIG. 18, the plurality of protrusion structure 420 includes two first protrusion portions 421 and one second protrusion portion 422, a distance between the two first protrusion portions 421 is less than a distance from either of the first protrusion portions 421 to the second protrusion portion 422; two positioning structures 150 are provided, and the two positioning structures 150 respectively correspond to the two first protrusion portions 421.

It should be noted that in this embodiment, a total of three protrusion structures 420 are provided, two of which are first protrusion portions 421 and one is a second protrusion portion 422. The distance between the two first protrusion portions 421 is small, while the distance between the second protrusion portion 422 and any one of the first protrusion portions 421 is large. Based on this, it can set up three positioning structures 150 corresponding to three protrusion structures 420 respectively. However, considering that it is difficult for assemblers to visually determine the distance between the positioning structures 150, there may be instances of incorrect initial installation.

To further enhance the foolproof design of this structure and ensure successful assembly of the frame body 100 and stator core 400 in one go, two positioning structures 150 are set for only the two second protrusion portions 422 (the two protrusion structures 420 that are closer together can be clearly distinguished from the figures). After successfully aligning the two positioning structures 150 with the two protrusion structures 420, the socket 730 and the positioning portion 113 are also successfully aligned, greatly saving assembly time and improving assembly efficiency.

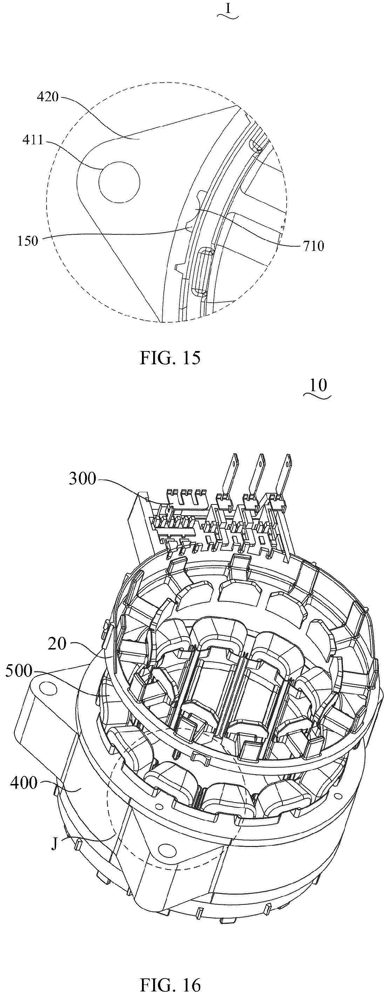

In an embodiment, referring to FIG. 16 and FIG. 17, a plurality of positioning portions 113 are provided, the plurality of positioning portions 113 are provided at intervals at the frame body 100, and a plurality of the sockets 730 are provided to correspond to the plurality of positioning portions 113.

Specifically, to further strengthen the limiting relationship between the frame body 100 and the stator core 400 and prevent the frame body 100 from rotating relative to the stator core 400, a plurality of socket 730 and a plurality of positioning portions 113 are respectively provided, and the two are provided in one-to-one correspondence, which further strengthens the limiting relationship between the frame body 100 and the stator core 400.

In an embodiment, referring to FIG. 14, FIG. 16, and FIG. 18, the insulating frame 20 further includes a weld platform 200 connected to the frame body 100, the weld platform 200 is located between two adjacent protrusion structures 420.

It should be noted that the insulating frame 20 includes not only the frame body 100 but also the weld platform 200 for connecting the wire harness wound from the winding 500 to the welding wire terminal 300. The weld platform 200 is located between two adjacent protrusion structures 420, and the weld platform 200 is axially spaced from the protrusion structures 420 respectively. The wall surface interferes with the stator core 400 during the welding process.

In existing motors, the wire harness led out from the winding of the stator is typically connected to terminals for electrical connection to other control modules. Using laser automatic welding to weld has many advantages, including high automation and high production efficiency, and it also avoids the quality risks associated with piercing terminals.

Laser welding often involves diffuse reflection, and the reflected light generated after diffuse reflection has a high temperature. The insulating frame used to mount terminals may overheat due to prolonged accumulation of reflected light, potentially leading to fire or other safety hazards.

In view of this, the present application proposes a stator assembly 10.

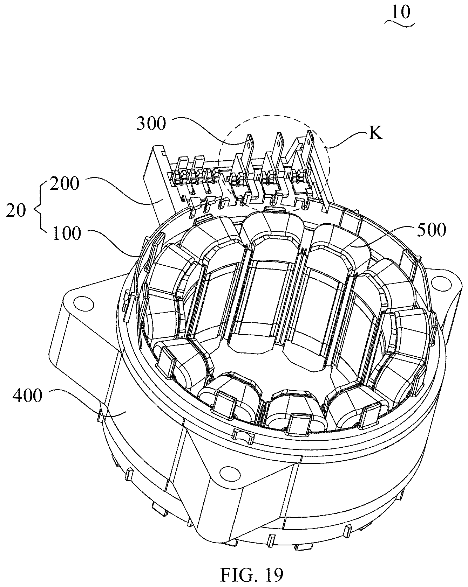

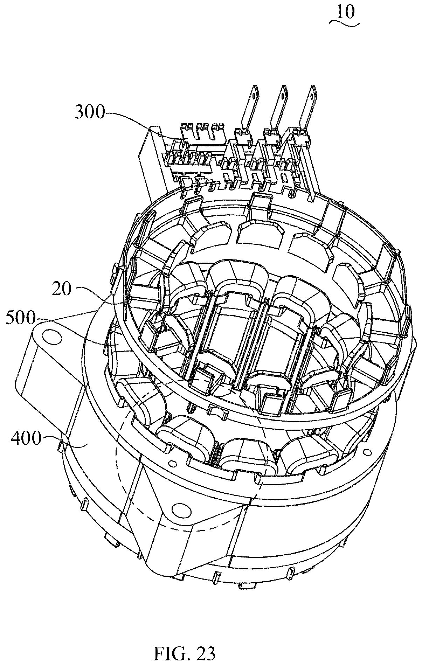

In the embodiments of the present application, as shown in FIG. 19 to FIG. 23, the stator assembly 10 includes a stator core 400, an insulating frame 20, and a welding wire terminal 300. The insulating frame 20 is installed at the stator core 400. The insulating frame 20 includes a frame body 100 and a weld platform 200 connected to the frame body 100. The weld platform 200 is provided with a first surface 230, and an installation platform 231 protrudes from the first surface 230, and a slot 810 is provided at the installation platform 231. The welding wire terminal 300 includes an insertion-and-connection portion 310 and a welding portion 320 connected to the insertion-and-connection portion 310, the insertion-and-connection portion 310 is inserted into the slot 810, the welding portion 320 is provided at a side of the installation platform 231. The installation platform 231 includes a first stage section 231b and a second stage section 231c connected to the first stage section 231b. The welding portion 320 is provided at the weld platform 200 and located at a side of the first stage section 231b. A height of the first stage section 231b relative to the first surface 230 is less than a height of the second stage section 231c relative to the first surface 230.

Specifically, the stator assembly 10 mainly consists of a stator core 400 and an insulating frame 20 stalled at the stator core 400. After the stator core 400 and insulating frame 20 are assembled, the winding 500 is wound around the stator core 400 and insulating frame 20. The stator core 400 is provided with a plurality of stator teeth protruding inwards, and the insulating frame 20 is provided with a plurality of tooth sections corresponding to the plurality of stator teeth, and the plurality of tooth sections and the plurality of stator teeth are provided in a one-to-one correspondence. The winding 500 is wound on each stator tooth and tooth section.

The weld platform 200 is part of the insulating frame 20. The weld platform 200 is the site for welding the welding wire terminal 300 to the wire harness leading out from the winding 500. The welding wire terminal 300 is positioned on the weld platform 200. To fix the welding wire terminal 300 and define the relative position of the welding wire terminal 300, an installation platform 231 is provided at the first surface 230 of the weld platform 200. Furthermore, to better secure the welding wire terminal 300, a slot 810 is provided at the installation platform 231. The welding wire terminal 300 is inserted into the slot 810 to fix the relative position of the welding wire terminal 300. The welding wire terminal 300 includes an insertion-and-connection portion 310 and a welding portion 320 connected to the insertion-and-connection portion 310. In this embodiment, the welding portion 320 and the insertion-and-connection portion 310 are integrally molded within the mold. The insertion-and-connection portion 310 of the welding wire terminal 300 is inserted into the slot 810, so that the welding wire terminal 300 is fixed by the installation platform 231, and the welding portion 320 is set on one side of the installation platform 231 for welding with the wire harness led out from the winding 500.

Considering that during laser welding in the welding portion 320, the laser will cause diffuse reflection, leading to overheating and even fire on the installation platform 231 adjacent to the welding portion 320, an avoidance setting is designed to the installation platform 231. The installation platform 231 is configured as a connected first stage section 231b and second stage section 231c, with the welding section of the welding wire terminal 300 located to one side of the first stage section 231b. Therefore, an avoidance setting is designed to the first stage section 231b, the height of the first stage section 231b relative to the first surface 230 is less than the height of the second stage section 231c relative to the first surface 230. By reducing the height of the first stage section 231b, the possibility of fire on the installation platform 231 is reduced, thus improving safety during the laser welding process.

It should be noted that the slot 810 can be provided at the first stage section 231b, or can be provided at the second stage section 231c, or can be further provided at both the first stage section 231b and the second stage section 231c. The above are all solutions of this embodiment. The first stage section 231b can be partially provided at the first surface 230, or can be entirely provided at the first surface 230; while the second stage section 231c can be partially provided at the first surface 230, or can be entirely provided at the first surface 230, and no specific limitation is made here.

The technical solution of the present application employs that an avoidance setting is designed to the installation platform 231 for installing the welding wire terminal 300, forming a first stage section 231b and a second stage section 231c. The height of the first stage section 231b is less than the height of the second stage section 231c. This prevents laser diffuse reflection during laser welding from causing the installation platform 231 to catch fire, thereby improving the safety of the welding wire terminal 300 and the wire harness of the winding 500 during automated laser welding.

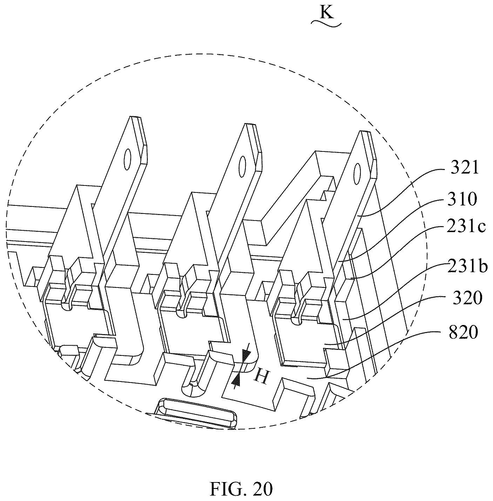

Furthermore, referring to FIG. 19 and FIG. 20, the height of the first stage section 231b relative to the first surface 230 is H, and H satisfies 0.3 mm ≤ H ≤ 0.6 mm.

Based on the aforementioned embodiments, considering that the height of the first stage section 231b relative to the first surface 230 should not be too high, otherwise it may cause the first stage section 231b to catch fire, posing a safety hazard, therefore, the height of the first stage section 231b relative to the first surface 230 is set to be less than or equal to 0.6 mm. Further considering that the first stage section 231b needs to fix the welding wire terminal 300, the height of the first stage section 231b relative to the first surface 230 is set to be equal to or greater than 0.3 mm. Therefore, the height of the first stage section 231b can be any value between 0.3 mm and 0.6 mm.

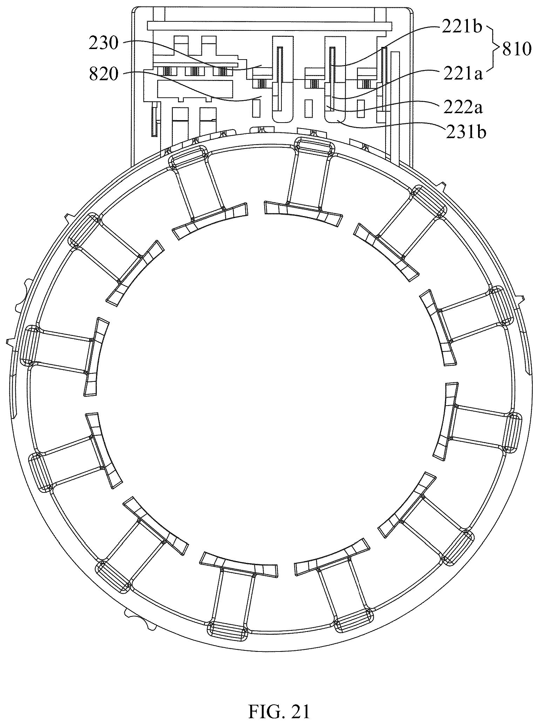

In an embodiment, referring to FIG. 20 and FIG. 21, the weld platform 200 is further provided with a second surface 820, the second surface 820 is lower than the first surface 231c, and the second stage section 231c is partially provided at the second surface 820.

Specifically, the weld platform 200 is further provided with a second surface 820 that forms a height difference with the first surface 230. As described in the above embodiment, the second stage section 231c is provided at the first surface 230, specifically, a portion of the second stage section 231c is provided at the first surface 230, while another portion is provided at the second surface 820. Furthermore, the second surface 820 must be lower than the first surface 230. This arrangement allows that the slot 810 on the second stage section 231c has a deeper groove depth, which improves the fixing and limiting effect of the welding wire terminal 300 on the second stage section 231c.

In an embodiment, referring to FIG. 21, the slot 810 includes a first slot portion 221a and a second slot portion 221b, the first slot portion 221a is provided at the first stage section 231b, the second slot portion 221b is provided at the second stage section 231c, and the first slot portion 221a communicates with the second slot portion 221b.

It should be noted that the slot 810 includes two slot portions, that is, the first slot portion 221a and the second slot portion 221b, the two slot portions are respectively located at the first stage section 231b and the second stage section 231c, and the two slot portions communicate with each other, which allows for better positioning and fixation of the limit terminals.

Referring to FIG. 21, the first stage section 231b is provided with an avoidance opening 222a for avoiding the welding wire terminal 300.

Furthermore, considering that the welding wire terminal 300 is located on one side of the first stage section 231b, it is conceivable that the welding wire terminal 300 has a portion transitioning from the slot 810 to one side of the first stage section 231b. To better secure the welding wire terminal 300 to the weld platform 200, an avoidance opening 222a is provided at the first stage section 231b to avoid the portion of the welding wire terminal 300 from the first slot portion 221a to the outside of the first stage section 231b.

In an embodiment, referring to FIG. 20 and FIG. 21, the first slot portion 221a and the second slot portion 221b are provided at a same straight line.

It should be noted that, considering that the insertion-and-connection portion 310 of the welding wire terminal 300 is sheet-like, the first slot portion 221a and the second slot portion 221b are arranged at the same straight line. Specifically, the slot width of the first slot portion 221a and the slot width of the second slot portion 221b are the same, and the first slot portion 221a and the second slot portion 221b are aligned, so that the peripheral edge of the slot opening of the first slot portion 221a and the peripheral edge of the slot opening of the second slot portion 221b are aligned opposite each other, allowing the slot 810 to better fix and limit the welding wire terminal 300.

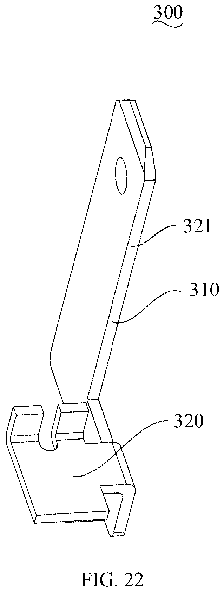

In an embodiment, see FIG. 20 and FIG. 22, the insertion-and-connection portion 310 is provided with an extension segment 321 exposed from a slot opening of the second slot portion 221b, and the extension segment 321 is configured for connecting with other components.

Specifically, the insertion-and-connection portion 310 is provided with an extension segment 321 that exposes the slot opening of the second slot portion 221b. According to the above embodiment, the welding portion 320 of the welding wire terminal 300 is configured to weld to the wire harness led out from the winding 500 wound on the stator core 400. Other components are electrically connected to the extension segment 321 formed by the insertion-and-connection portion 310, wherein the electrical connection can be made by welding or other means.

In an embodiment, referring to FIG. 20 and FIG. 22, the insertion-and-connection portion 310 and the welding portion 320 are perpendicular to each other.

It should be noted that the insertion-and-connection portion 310 and the welding portion 320 are perpendicular to each other, allowing the structure to be partially inserted into the slot 810, while the other part is placed at one side of the first stage section 231b. Furthermore, the insertion-and-connection portion 310 and the welding portion 320 are integrally formed in a molten state, simplifying the molding process.

In an embodiment, referring to FIG. 19 to FIG. 21, the insulating frame 20 is integrally molded inside a mold.

Specifically, the insulating frame 20 is made of a plastic material, and the insulating frame 20 is integrally formed by injection molding in a mold. Some details are formed after molding, thus saving time and cost in manufacturing the insulating frame 20, and improving the manufacturing efficiency of the insulating frame 20.

The present application also proposes a motor, the motor includes a stator assembly 10, and the stator assembly 10 includes an insulating frame 20. The specific structure of the insulating frame 20 is described in the above embodiments. Since this motor adopts all the technical solutions of the above embodiments, it possesses at least all the beneficial effects brought about by the technical solutions of the above embodiments, which will not be elaborated further here.

In this embodiment, the motor with the aforementioned stator assembly 10 structure is a brushless direct-current motor. Certainly, it can also be a brushless alternating-current motor or other types of motors.

This motor is mainly used in washing equipment (washing machines), but it can also be used in electric fans, refrigerators, air conditioners, range hoods, food processors, and other electrical appliances.

The above descriptions are merely embodiments of the present application and do not limit the scope of the present application. Any equivalent structural transformations made based on the concept of the present application and the content of the description and drawings, or direct/indirect applications in other related technical fields, are included within the scope of the present application.

## Claims

1. An insulating frame, applied to a motor, **characterized in that** the insulating frame is provided with a plurality of first wire clamp grooves and a plurality of second wire clamp grooves, wherein an installation position is provided between the plurality of first wire clamp grooves and the plurality of second wire clamp grooves, and the installation position is configured to install a welding wire terminal.

2. The insulating frame according to claim 1, comprising a frame body and a weld platform connected to the frame body, wherein the plurality of first wire clamp grooves are provided at the weld platform, and the plurality of second wire clamp grooves are provided at the frame body.

3. The insulating frame according to claim 1 or 2, wherein the plurality of first wire clamp grooves and the plurality of second wire clamp grooves are provided in one-to-one correspondence.

4. The insulating frame according to claim 2 or 3, wherein the weld platform is provided with a plurality of wire clamp platforms spaced apart, and the plurality of first wire clamp grooves are respectively provided at the plurality of wire clamp platforms, wherein each of the first wire clamp grooves is provided with a first opening configured to place a wire harness into the first wire clamp groove, and each of the first wire clamp grooves is configured to penetrate through two opposite wall surfaces of a corresponding wire clamp platform to allow the wire harness to pass through.

5. The insulating frame according to any one of claims 1 to 4, wherein each of the first wire clamp grooves is provided with two oppositely provided groove walls, and two corresponding limit protrusions are provided at the two groove walls respectively.

6. The insulating frame according to claim 5, wherein a width of each of the first wire clamp grooves is configured to gradually decrease in a direction from the first opening to the limit protrusions.

7. The insulating frame according to claim 5 or 6, wherein a distance between the two limit protrusions is L₁, and L₁ satisfies 0.53 mm ≤ L₁ ≤ 0.58.

8. The insulating frame according to any one of claims 5 to 7, wherein the two limit protrusions are provided at middle parts of the two groove walls respectively.

9. The insulating frame according to any one of claims 2 to 8, wherein:
the second wire clamp grooves are provided at a periphery of the frame body;
each of the second wire clamp grooves is provided with a second opening configured to place a wire harness into the second wire clamp groove; and
each of the second wire clamp grooves is configured to penetrate through two opposite sides of the periphery of the frame body to allow the wire harness to pass through.

10. The insulating frame according to any one of claims 2 to 9, wherein an outer peripheral edge of each of the second wire clamp grooves adjacent to an inner side of the frame body is provided as an arc-shaped expansion port.

11. The insulating frame according to any one of claims 1 to 10, wherein a groove width of the second wire groove is L₂, and L₂ satisfies 0.58 mm ≤ L₂ ≤, 0.63 mm.

12. The insulating frame according to any one of claims 2 to 11, wherein:
the frame body is provided with a plurality of tooth sections extending towards an interior of the frame body, for winding windings, wherein a plurality of first barriers are respectively provided at outer sides of the plurality of tooth sections adjacent to the frame body; and
a retaining edge is provided protruding at an outer side of the frame body,
wherein the retaining edge and the plurality of first barriers are provided spaced apart to limit a wire harness led out from the winding.

13. The insulating frame according to claim 12, wherein the retaining edge is provided around a plurality of first barriers adjacent to the weld platform.

14. The insulating frame according to claim 12 or 13, wherein a plurality of reinforcing ribs are provided spaced apart at an outer periphery of the retaining edge.

15. The insulating frame according to any one of claims 12 to 14, wherein the plurality of second wire grooves are provided spaced apart at the retaining edge.

16. The insulating frame according to any one of claims 12 to 15, wherein an outer periphery of the frame body is configured to extend along an axial direction of the frame body to form a skirt edge, wherein:
the skirt edge is configured to extend along the axial direction of the frame body; and
the skirt edge is provided at an outer periphery of the plurality of first barriers, and a gap is provided between the skirt edge and the plurality of skirt edges for bundling a wire harness led out from the winding.

17. The insulating frame according to any one of claims 12 to 16, wherein the plurality of first barriers correspond one-to-one with the plurality of tooth sections.

18. The insulating frame according to claim 16 or 17, wherein the skirt edge is provided between the weld platform and the plurality of first barriers.

19. The insulating frame according to any one of claims 16 to 18, wherein a ratio of a length of the skirt edge along a circumferential direction of the frame body to a circumference of the frame body is in a range of 1/4 to 1.

20. The insulating frame according to any one of claims 16 to 19, wherein a length of the skirt edge along a circumferential direction of the frame body is half of a circumference of the frame body.

21. The insulating frame according to any one of claims 16 to 20, wherein the skirt edge is provided with inclined guide surfaces at both ends thereof along a circumferential direction of the frame body.

22. The insulating frame according to any one of claims 16 to 21, wherein a side of the skirt edge adjacent to the weld platform is provided with a plurality of wire clamp grooves.

23. The insulating frame according to any one of claims 12 to 22, wherein a plurality of second barriers are respectively provided at positions of the plurality of tooth sections away from the frame body, and the plurality of second barriers correspond one-to-one with the plurality of first barriers.

24. The insulating frame according to any one of claims 16 to 23, wherein a plurality of reinforcing ribs are provided spaced apart at an outer circumference of the skirt edge.

25. A stator assembly, comprising:
the insulating frame according to any one of claims 1 to 24;
a stator core; and
a plurality of welding wire terminals,
wherein the plurality of welding wire terminals are provided at the installation position, and the insulating frame is provided at one side of the stator core.

26. The stator assembly according to claim 25, wherein the weld platform is provided with a first surface, wherein an installation platform protrudes from the first surface, a first slot is provided at the installation platform, and the welding wire terminal is at least partially inserted into the first slot.

27. The stator assembly according to claim 26, wherein:
the installation platform comprises a first stage section and a second stage section connected to the first stage section; and
the welding wire terminal comprises an insertion-and-connection portion and a welding portion, wherein the insertion-and-connection portion is inserted into the first slot, and the welding portion is provided at one side of the first stage section,
wherein a height of the first stage section relative to the first surface is less than a height of the second stage section relative to the first surface.

28. The stator assembly according to claim 26 or 27, wherein the height of the first stage section relative to the first surface is H, and H satisfies 0.3 mm ≤ H ≤ 0.6 mm.

29. The stator assembly according to any one of claims 25 to 28, wherein a side of the frame body adjacent to the stator core is provided with a plurality of insertion portions spaced apart, and the stator core is provided with a plurality of second slots corresponding to the insertion portions, wherein the plurality of insertion portions are respectively inserted into the plurality of second slots.

30. The stator assembly according to any one of claims 25 to 29, wherein:
an outer circumference of the stator core is provided with a plurality of protrusion structures spaced apart, wherein the protrusion structures are provided with open pores; and
an outer circumference of the insulating frame is provided with a plurality of positioning structures, wherein the positioning structures are aligned with the open pores.

31. The stator assembly according to claim 30, wherein:
the protrusion structures comprise two first protrusion portions and one second protrusion portion, wherein a distance between the two first protrusion portions is less than a distance from either of the first protrusion portions to the second protrusion portion; and
two positioning structures are provided, and the two positioning structures respectively correspond to the open pores in the two first protrusion portions.

32. The stator assembly according to claim 30 or 31, wherein the positioning structures comprise positioning platforms protruding from an outer circumference of the frame body, wherein the positioning platforms correspond to the open pores.

33. The stator assembly according to claim 32, wherein the positioning platforms are provided with positioning grooves corresponding to the open pores.

34. The stator assembly according to claim 33, wherein groove walls of the positioning grooves are curved to match the open pores.

35. The stator assembly according to claim 25, wherein the insulating frame is installed and fitted with the stator core, and the insulating frame comprises a frame body, wherein:
a positioning portion is provided at a side of the frame body adjacent to the stator core;
the stator core is provided with a socket adapted to the positioning portion;
a plurality of positioning structures are provided at an outer circumference of the frame body; and
when the positioning portion is fitted with the socket, the positioning structures are aligned with protrusion structures.

36. The stator assembly according to claim 35, wherein the protrusion structures are each provided with a positioning hole, and the positioning structures correspond to the positioning holes.

37. The stator assembly according to claim 35 or 36, wherein the positioning structures protrude from the outer circumference of the frame body.

38. The stator assembly according to claim 36 or 37, wherein the positioning structures are provided with openings corresponding to the positioning holes, the openings penetrating through the positioning structures in an axial direction of the insulating frame.

39. The stator assembly according to claim 38, wherein the openings are notch grooves each with a notch facing away the frame body, wherein the notches correspond to the positioning holes.

40. The stator assembly according to claim 39, wherein each of the positioning holes is circular, and a groove wall of each of the notch grooves is arc-shaped.

41. The stator assembly according to any one of claims 35 to 40, wherein a plurality of positioning portions are provided spaced apart at the frame body, and a plurality of sockets are provided to correspond to the plurality of positioning portions.

42. The stator assembly according to any one of claims 26 to 34, wherein the weld platform is further provided with a second surface, wherein the second surface is lower than the first surface, and the second stage section is partially provided at the second surface.

43. The stator assembly according to any one of claims 26 to 34 and 42, wherein the first slot comprises a first slot portion and a second slot portion, wherein the first slot portion is provided at the first stage section, the second slot portion is provided at the second stage section, and the first slot portion communicates with the second slot portion.

44. The stator assembly according to claim 43, wherein the first stage section is provided with an avoidance opening for avoiding the welding wire terminal.

45. The stator assembly according to claim 43 or 44, wherein the first slot portion and the second slot portion are arranged in a same straight line.

46. The stator assembly according to any one of claims 43 to 45, wherein the insertion-and-connection portion is provided with an extension segment exposed from a slot opening of the second slot portion, wherein the extension segment is configured for connecting with other components.

47. The stator assembly according to any one of claims 27 to 34 and 42 to 46, wherein the insertion-and-connection portion and the welding portion are perpendicular to each other.

48. The stator assembly according to any one of claims 25 to 47, wherein the insulating frame is integrally molded inside a mold.

49. A motor, comprising the stator assembly according to any one of claims 25 to 47.
